# FASCICULE DE BREVET EUROPEEN

(11) **EP 1 786 263 B1**
(45) Date de publication et mention de la délivrance du brevet: **11.01.2012**
(21) Numéro de dépôt: 05805574.0
(22) Date de dépôt: 02.09.2005
(51) Int. Cl.: A01L 7/02

(54) **COUSSINET DE VOUTE PLANTAIRE SUR MESURE A USAGE IMMEDIAT, POUR PIED FERRE**
DIREKT VERWENDETE UNTERLAGE FÜR DAS GEWÖLBE EINER BESCHLAGENEN HUFE EINES TIERES
DIRECTLY USED PAD FOR THE ARCH OF A SHOD HOOF OF AN ANIMAL

(30) Priorité: 03.09.2004 FR 0409322
(43) Date de publication de la demande: 23.05.2007
(73) Titulaire: Vaillant, Joseph, 74300 Cluses (FR)
(72) Inventeur: Vaillant, Joseph, 74300 Cluses (FR)
(74) Mandataire: Poncet, Jean-François
(86) Numéro de dépôt international: PCT/FR2005/002234
(87) Numéro de publication internationale: WO 2006/027501

(56) Documents cités:
- DE-U1- 29 821 553
- FR-A- 2 025 660
- US-A- 5 199 498
- US-B1- 6 412 566
- US-B1- 6 588 511

## Description

La présente invention concerne un coussinet de voûte plantaire pour pied ferré d'animaux, et plus particulièrement pour sabot d'un cheval, destiné notamment au sport équestre.

Les animaux ferrés et utilisés en épreuve sportive ont leurs pieds ferrés avec des protections métalliques ou synthétiques avec une plaque intercalaire placée entre le fer et le sabot. Ces plaques sont généralement des plaques amortissantes qui sont réalisées en un matériau souple ou une combinaison de matériau destinée à amortir les chocs qui pourraient endommager les membres du cheval.

Par ailleurs, la voûte plantaire (appelée sole) est généralement comblée à l'aide de différents produits moulables sur place afin d'isoler cette zone de toute intrusion de corps étrangers. Ces produits sont généralement des pâtes ou des mastics ayant une durée de séchage pouvant dépasser 24 heures.

Tous les matériaux utilisés traditionnellement sont d'une dureté inconnue, incompatible avec le confort souhaité et leur temps de séchage trop long sont tout aussi incompatible avec les exigences de la vie moderne, qui demande à ce que le cheval soit immédiatement disponible, et les podologues équins et maréchaux ferrants ne disposent pas aujourd'hui, de matériaux moulables à dureté contrôlée et séchage rapide spécifiques à cette application, excepté sur des applications de soutien plus fermes utilisés notamment pour des besoins orthopédiques.

La demande de brevet FR 0409322 a ainsi proposé un matériau utilisé pour la réalisation du coussinet plantaire d'une dureté shore comprise entre 10 et 20 Shore A, ce qui permet d'obtenir un coussinet plantaire ayant de bonnes propriétés mécaniques pour un grand nombre de voûtes plantaires de pieds ferrés d'animaux.

Or, pour certaines configurations extrêmes de voûtes, il serait intéressant d'améliorer le compromis confort/ amortissement du coussinet implanté entre la plaque de ferrure et la sole. En effet, certains pieds d'animaux présentent une épaisseur de corne extrêmement fine du côté de la sole rendant cette dernière particulièrement sensible et les coussinets déjà proposés risquent d'augmenter dangereusement les compressions sur la sole. D'autres pieds présentant une profondeur de voûte plantaire très importante telle qu'elle présente des ouvertures à l'arrière du pied ou lacunes plus importantes que la normale. A l'occasion de certains mouvements par exemple pendant une pratique sportive de l'animal particulièrement sollicitante pour le pied, les coussinets déjà proposés peuvent sortir de ces lacunes et ce, malgré la présence d'une plaque intercalaire.

En outre, il serait intéressant d'améliorer la durabilité des coussinets déjà proposés. En effet, certaines pratiques sportives intenses impriment des mouvements de pied à grande cadence, ce qui transmet de très fortes sollicitations mécaniques aux coussinets déjà proposés. Cette fatigue qui est ainsi imposée à chaque type de coussinet déjà proposé, peut amener ce dernier à casser et à se disperser par l'arrière du pied.

Le document FR 2 025 660 décrit un coussinet de voûte plantaire de dureté comprise entre 20 et 40 Shore A. Une telle dureté procure un rapport confort-amortissement insatisfaisant. Et un tel coussinet présente un risque de casse élevé.

Le document US 6,412,566 propose de fabriquer un coussinet de voûte plantaire par injection de matériau par l'arrière du pied. Un tel mode de fabrication conduit souvent à une mauvaise répartition du matériau dans la cavité de voûte plantaire, et il en résulte une durabilité réduite du coussinet.

Un premier but de l'invention est alors de proposer un coussinet pour voûte plantaire qui permette, même à des voûtes plantaires aux configurations extrêmes évoquées ci-dessus, d'avoir un meilleur compromis confort-amortissement.

Un autre but de l'invention est alors de proposer une solution pour obtenir un coussinet pour tout type de voûte plantaire qui présente une meilleure durabilité.

A cet effet, l'invention a pour objet un coussinet de voûte plantaire pour pied ferré d'animal, en matériau synthétique ayant une dureté finale comprise entre 5 et 25 Shores, caractérisé en ce qu'il présente une résistence au déchirement d'au moins 12 kN/m.

Par dureté finale, il faut comprendre ici et dans le cadre de l'invention le coussinet durci ayant déjà rempli l'espace entre la plaque de ferrure et la sole.

Selon une autre caractéristique, le coussinet de voûte plantaire présente pour une résistance à la traction d'au moins 2,5 MPa, un allongement à la rupture au moins égal à 450%.

D'autres caractéristiques et avantages ressortiront à la lecture de la description détaillée faite en référence aux exemples suivants :

On précise ici que la résistance à la traction et l'allongement ont été mesurées selon la norme ASTM D412 et la résistance au déchirement selon la norme ASTM D624.

Pour chacun des exemples, le silicone a été choisi pour que son temps de séchage soit compris entre 3 et 15 minutes. Grâce à cette plage de séchage, l'opérateur chargé de la réalisation du coussinet peut réaliser un travail soigné, tandis que la rapidité du séchage qui est particulièrement court, permet une utilisation quasi immédiate de l'animal ferré, ce qui permet à l'opérateur de pouvoir apprécier l'efficacité du produit immédiatement après son travail.

Egalement pour chacun des exemples suivants, le matériau utilisé est un silicone composé de deux composants, d'une base et d'un durcisseur, qui doivent être mélangés juste avant l'utilisation, et dont le temps de séchage est compris entre 3 et 15 minutes, comme par exemple 5 minutes.

Le procédé de réalisation pour chaque exemple du coussinet consiste dans les étapes suivantes :

Selon une première étape, l'opérateur procède au mélange de la base et du durcisseur, comme par exemple grâce à une seringue à double compartiment ayant un pré-dosage des deux composants.

Selon une deuxième étape le matériau réalisé selon la première étape est mis en place dans par exemple un pistolet d'injection.

Selon une troisième étape, l'opérateur pratique à l'injection du matériau entre la sole et la plaque de ferrure et ce soit par l'arrière du pied qui présente des orifices ouvrant cette partie du pied vers l'extérieur (lacunes centrales ou latérales), soit par des trous d'injection percés dans la plaque à cet effet. La viscosité du produit dans sa phase « temps de travail » permet un moulage naturel par gravité, sans nécessité de surpression.

Selon une quatrième étape, l'opérateur procède au séchage du matériau. On notera que l'immobilisation du pied ainsi rempli de son coussinet est réduit au minimum grâce au temps de séchage très rapide. Pendant cette opération, le séchage (réticulation) se produit instantanément de façon neutre chimiquement, sans modification volumique et sans exothermie. Ainsi, l'immobilisation du pied rempli de son coussinet est réduite au minimum, grâce à un temps de séchage compris entre 3 et 15 minutes, et par exemple de 5 minutes.

### Exemple 1 : (selon l'enseignement du brevet FR 0409322)

Coussinet réalisé en silicone présentant les caractéristiques mécaniques suivantes :
Dureté Shore A : 10
Résistance à la traction en MPa : 1,4
Allongement à la rupture : 350%
Résistance au déchirement en kN/m : 4

### Exemple 2 : (selon l'enseignement du brevet FR 0409322)

Coussinet réalisé en silicone présentant les caractéristiques mécaniques suivantes :
Dureté Shore A : 18
Résistance à la traction en MPa :1,6
Allongement à la rupture : 230 %
Résistance au déchirement en kN/m : 4,8

### Exemple 3 :

Coussinet réalisé en silicone présentant les caractéristiques mécaniques suivantes :
Dureté Shore A :10
Résistance à la traction en MPa :3
Allongement à la Rupture : 550%
Résistance au déchirement en kN/m : 15

### Exemple 4 :

Coussinet réalisé en silicone présentant les caractéristiques mécaniques suivantes :
Dureté Shore A :18
Résistance à la traction en MPa :4
Allongement à la Rupture : 500%
Résistance au déchirement en kN/m 15

### Exemple 5 :

Coussinet réalisé en silicone présentant les caractéristiques mécaniques suivantes :
Dureté Shore A :5
Résistance à la traction en MPa :2,5
Allongement à la Rupture : 500%
Résistance au déchirement en kN/m : 12

### Exemple 6 :

Coussinet réalisé en silicone présentant les caractéristiques mécaniques suivantes :
Dureté Shore A :25
Résistance à la traction en MPa :4
Allongement à la Rupture : 450%
Résistance au déchirement en kN/m : 15

On a constaté que :
- pour des coussinets selon les exemples 1 et 2, soumis à des mouvements de pieds à cadence normale pour un cheval, le confort et l'amortissement étaient tout à fait acceptables ;
- pour des coussinets selon les exemples 1 et 2, soumis à certaines pratiques sportives intenses avec mouvements de pied à grande cadence, d'une part une fatigue accélérée qui conduit parfois à leur casse et à leur dispersion par l'arrière du pied ferré et d'autre part respectivement une compression trop importante au niveau de la sole de pieds avec corne très fine et un échappement de matière par la l'arrière du pied ;
- pour le coussinet selon l'exemple 3, le confort de pied pour voûte plantaire à sole extrêmement fine était amélioré ;
- pour le coussinet selon l'exemple 4, une meilleure résistance à la compression était obtenue ;
- pour les coussinets selon les exemples 3,4,5,6, l'augmentation sensible des résistances mécaniques à la traction et au déchirement conduisait une meilleure durabilité.

On a compris que grâce aux caractéristiques du matériau utilisé, à savoir sa dureté, sa consistance et sa structure, les coussinets ainsi formés participent pleinement à l'amortissement des chocs dans la phase du poser du pied, ainsi qu'à la répartition des pressions du pied qui est fortement sollicité notamment durant les exercices sportifs.

On a compris que le coussinet réalisé avec le matériau revendiqué rempli pleinement le rôle de comblement pour éviter toute intrusion de corps étranger entre la sole et la plaque, et le procédé de réalisation permet une mise en forme sur mesure et individualisée. Il permet aussI de répartir les pressions de façon idéale, tandis que le séchage est immédiat avec un contact cutané sans restriction.

On ajoutera aussi que le contact cutané est permis, grâce à la neutralité chimique du matériau, et ce sans aucun risque, ni précautions préalables.

## Revendications

1. Coussinet de voûte plantaire pour pied ferré d'animal, en matériau synthétique ayant une dureté comprise entre 5 et 25 Shore A, **caractérisé en ce qu'**il présente une résistance au déchirement d'au moins 12 kN/m.

2. Coussinet de voûte plantaire pour pied ferré d'animal, selon la revendication 1, **caractérisé en ce que** le coussinet présente une résistance à la traction d'au moins 2,5 MPa.

3. Coussinet de voûte plantaire selon la revendication 2, **caractérisé en ce qu'**il présente un allongement à la rupture au moins égal à 450%.

4. Coussinet de voûte plantaire selon l'une des revendications précédentes, **caractérisé en ce que** le matériau du coussinet est du type dont le temps de séchage est compris entre 3 et 15 minutes.

5. Coussinet de voûte plantaire pour pied ferré d'animal, selon l'une quelconque des revendications précédentes, **caractérisé en ce que** le matériau est un matériau composé d'une base et d'un durcisseur.

6. Coussinet de voûte plantaire selon la revendication 5, **caractérisé en ce que** le matériau est un silicone.

7. Procédé de réalisation d'un coussinet de voûte plantaire, selon les revendications précédentes comportant :
- une première étape consistant à procéder au mélange d'une base et d'un durcisseur,
- une deuxième étape consistant à mettre le matériau réalisé selon la première étape dans un pistolet d'injection,
- une troisième étape consistant à pratiquer l'injection du matériau entre la sole et la plaque de ferrure,
**caractérisé en ce que** l'injection de la troisième étape est effectuée par des trous prévus à cet effet dans la plaque de ferrure.

8. Procédé de réalisation d'un coussinet de voûte plantaire selon la revendication 7, **caractérisé en ce que**, lors de la troisième étape, on injecte en outre le matériau réalisé à la première étape par l'arrière du pied qui présente des orifices ouvrant cette partie du pied vers l'extérieur (lacunes centrales ou latérales).

9. Procédé de réalisation d'un coussinet de voûte plantaire selon l'une quelconque des revendications précédentes, **caractérisé en ce qu'**il comprend une quatrième étape consistant à procéder au séchage du matériau.

## Claims

1. Pad for the plantar arch for a shod hoof of an animal, of synthetic material having a hardness ranging between 5 and 25 Shore A, **characterized in that** it presents a tear strength of at least 12 kN/m.

2. Pad for the plantar arch for a shod hoof of an animal, according to claim 1, **characterized in that** the pad presents a tensile strength of at least 2.5 MPa.

3. Pad for the plantar arch according to claim 2, **characterized in that** it presents an elongation at fracture at least equal to 450%.

4. Pad for the plantar arch according to one of the preceding claims, **characterized in that** the material of the pad is of the type whose drying time lies between 3 and 15 minutes.

5. Pad for the plantar arch for a shod hoof of an animal, according to any of the preceding claims, **characterized in that** the material is a material made up of a base and a hardener.

6. Pad for the plantar arch according to claim 5, **characterized in that** the material is a silicone.

7. Method for making a pad for the plantar arch, according to the preceding claims, including:
- a first step which consists in mixing a base and a hardener,
- a second step which consists in putting the material made according to the first step in an injection gun,
- a third step which consists in injecting the material between the sole and the shoeing pad,
**characterized in that** the injection during the third step is made by holes provided for this purpose in the shoeing pad.

8. Method for making a pad for the plantar arch according to claim 7, **characterized in that**, during the third step, the material thus realized in the first step is injected by the back of the hoof which presents openings opening this part of the hoof towards exterior (central or collateral grooves).

9. Method for making a pad for the plantar arch according to any of the preceding claims, **characterized in that** it includes a fourth step which consists in drying the material.

## Patentansprüche

1. Unterlage für das Gewölbe eines beschlagenen Hufes eines Tieres, wobei die Unterlage aus synthetischem Material ist, das eine Härte zwischen 5 und 25 Shore A hat, **dadurch gekennzeichnet, dass** sie eine Reißfestigkeit von mindestens 12 kN/m hat.

2. Unterlage für das Gewölbe eines beschlagenen Hufes eines Tieres gemäß dem Patentanspruch 1, **dadurch gekennzeichnet, dass** die Unterlage eine Zugfestigkeit von mindestens 2,5 MPa hat.

3. Unterlage für das Fußgewölbe nach Anspruch 2, **dadurch gekennzeichnet, dass** sie eine Bruchdehnung von mindestens gleich 450% hat.

4. Unterlage für das Fußgewölbe nach einem der vorhergehenden Ansprüche, **dadurch gekennzeichnet, dass** das Material der Unterlage von solcher Art ist, deren Härtezeit zwischen 3 und 15 Minuten liegt.

5. Unterlage für das Gewölbe eines beschlagenen Hufes eines Tieres nach irgendeinem der vorhergehenden Ansprüche, **dadurch gekennzeichnet, dass** das Material aus einem Material ist, das aus einer Basis und einem Härter zusammengesetzt ist.

6. Unterlage für das Fußgewölbe nach Anspruch 5, **dadurch gekennzeichnet, dass** das Material ein Silikon ist.

7. Verfahren zur Herstellung einer Unterlage für ein Fußgewölbe nach den vorhergehenden Ansprüchen mit:
- einem ersten Schritt, der daraus besteht, eine Mischung aus einer Basis und einem Härter bereitzustellen,
- einem zweiten Schritt, der darin besteht, das im ersten Schritt bereitgestellte Material in eine Injektionspistole zu bringen,
- einem dritten Schritt, der darin besteht, eine Injektion des Materiales zwischen die Sohle und den Hufbeschlag einzuspritzen,
**dadurch gekennzeichnet, dass** das Einspritzen des dritten Schrittes durch Löcher hindurch erfolgt, die zu diesem Zweck in dem Hufbeschlag vorgesehen sind.

8. Verfahren zur Herstellung einer Unterlage für das Fußgewölbe nach Anspruch 7, **dadurch gekennzeichnet, dass** man während des dritten Schrittes zusätzlich das Material, das im ersten Schritt bereitgestellt wurde, von der Hinterseite des Fußes einspritzt, die Öffnungen aufweist, die diesen Teil des Fußes zur Außenseite hin (mittige oder seitliche Lücken) öffnet.

9. Verfahren zur Herstellung einer Unterlage für das Fußgewölbe nach irgendeinem der vorhergehenden Ansprüche, **dadurch gekennzeichnet, dass** es einen vierten Schritt enthält, der darin besteht, eine Aushärtung des Materiales durchzuführen.
